# DEMANDE DE BREVET EUROPEEN

(11) **EP 0 622 148 A1**
(43) Date de publication de la demande: **02.11.1994**
(21) Numéro de dépôt: 94470010.3
(22) Date de dépôt: 08.04.1994
(51) Int. Cl.: B23K 11/25, B23K 11/06

(54) **Procédé de régulation du courant de soudage par résistance électrique et soudeuse pour sa mise en oeuvre**

(30) Priorité: 27.04.1993 FR 9304968
(71) Demandeur: SOLLAC S.A., F-92800 Puteaux (FR)
(72) Inventeur: Brach, Jean-Luc, F-57330 Entrange (FR)
(74) Mandataire: Ventavoli, Roger

(57) **Abrégé**

Procédé de régulation du courant de soudage par résistance électrique à la molette (3,4) de deux tôles métalliques (5,6) en recouvrement sur leurs bords, du type comportant un transformateur de soudage (1) dont le circuit primaire comporte un dispositif de commande du courant primaire (2), un capteur de courant secondaire (9), constitué par une sonde magnétorésistive et un dispositif électronique (15) de calcul d'un courant optimal de soudage, ledit courant optimal de soudage étant déterminé en fonction de l'épaisseur et de la résistivité électrique de chacune des deux tôles métalliques (5,6), caractérisé en ce que ledit capteur de courant secondaire (9) est disposé à proximité immédiate des organes de soudage (3,4), le courant optimal de soudage est exprimé sous la forme d'un courant primaire équivalent optimal de soudage, le courant mesuré par ledit capteur de courant secondaire (9) est transformé en un courant primaire équivalent effectif de soudage et l'on compare ledit courant primaire effectif de soudage audit courant primaire optimal de soudage, le signal d'erreur agissant sur ledit dispositif de commande du courant primaire (2).

## Description

L'invention concerne le soudage par résistance électrique. Plus particulièrement, l'invention a trait au soudage de deux tôles métalliques en recouvrement, le soudage étant effectué à l'aide d'électrodes, par exemple deux molettes disposées de part et d'autre de la zone de recouvrement des tôles et traversées par le courant de soudage, les électrodes exerçant une pression mécanique sur les tôles.

On sait que le courant de soudage est fourni au moyen d'un transformateur de soudage dont le circuit secondaire se trouve pratiquement en court-circuit sur les électrodes de soudage. Le courant de soudage, dont l'intensité peut s'élever à plusieurs dizaines de milliers d'ampères, est amené aux électrodes par l'intermédiaire de barres conductrices depuis l'enroulement secondaire du transformateur. La commande du courant de soudage s'effectue en agissant sur l'intensité du courant primaire par l'intermédiaire d'un dispositif de commande du type "hacheur de courant".

Pour contrôler la qualité de la soudure obtenue, il a été proposé, dans la demande de brevet français antérieure de la demanderesse n° 92 11 789 du 5 octobre 1992, de mesurer l'intensité du courant secondaire du transformateur et de comparer cette valeur mesurée à une valeur optimale pour le courant de soudage calculée à partir du courant primaire en prenant en compte également l'épaisseur et la résistivité électrique de chacune des deux tôles.

La comparaison du courant secondaire effectif de soudage avec ce courant optimal de soudage calculé permet de réaliser un contrôle concernant la qualité de la soudure réalisée. Toutefois il ne s'agit que d'un diagnostic a posteriori qui ne permet pas de garantir une qualité de soudure d'emblée.

C'est pourquoi la présente invention se propose de fournir un procédé de régulation qui permet d'obtenir de manière fiable une soudure présentant une qualité minimale déterminée.

A cet effet l'invention a pour objet un procédé de régulation du courant effectif de soudage d'une soudeuse par résistance électrique, par exemple de tôles métalliques en recouvrement de leurs bords, du type comportant un transformateur dont le circuit secondaire est pourvu des électrodes de soudage et dont le circuit primaire comprend un dispositif de commande du courant primaire, un capteur de courant secondaire permettant d'en mesurer l'intensité et une unité de calcul d'un courant optimal de soudage, (ledit courant optimal de soudage étant déterminé en fonction de l'épaisseur et de la résistivité électrique de chacune des deux tôles métalliques) caractérisé en ce que :
- on exprime le courant optimal de soudage sous la forme d'un courant primaire équivalent optimal de soudage ;
- on transforme le courant mesuré par ledit capteur de courant secondaire en un courant primaire équivalent effectif de soudage ;
- on compare ledit courant primaire effectif de soudage audit courant primaire optimal de soudage, et on génère un signal d'écart ; et
- quand ledit signal d'écart dépasse une valeur "seuil" préétablie, on fait agir ledit signal sur le dispositif de commande du courant primaire de manière à ramener le signal d'écart sous ladite valeur "seuil".

De préférence, le capteur d'intensité du courant secondaire est disposé le plus près possible des deux tôles métalliques à assembler afin de s'affranchir au maximum des éventuelles pertes de courant secondaire dues en particulier aux défauts d'isolement du circuit secondaire face aux très hautes densités de courant qui le parcourent.

Du fait que le courant mesuré au secondaire par le capteur est exprimé sous la forme d'un courant primaire équivalent et que l'on calcule directement le courant optimal de soudage sous la forme d'un courant primaire équivalent, il est possible de réaliser aisément une régulation en agissant sur le courant primaire par l'intermédiaire du dispositif de commande du courant disposé dans le circuit primaire.

Selon une mise en oeuvre préférée de l'invention, on mesure en permanence les tensions primaire et secondaire du transformateur et on détermine le rapport de transformation instantané. Le courant primaire effectif de soudage est alors obtenu par multiplication du courant mesuré par le capteur de courant secondaire par ledit rapport de transformation instantané.

Le fait de mesurer la valeur instantanée du rapport de transformation permet de s'affranchir des différents phénomènes transitoires créés en particulier par les pertes du transformateur et par les variations importantes du courant secondaire.

L'invention a également pour objet une soudeuse électrique pour la mise en oeuvre du procédé précité, caractérisée en ce qu'elle comporte :
- un transformateur de soudage comportant dans son circuit primaire un dispositif de commande du courant primaire et, dans son circuit secondaire, un capteur de mesure de l'intensité du courant secondaire ;
- un circuit diviseur recevant la tension primaire d'une part et la tension secondaire d'autre part et fournissant en sortie un rapport de transformation ;
- un circuit multiplicateur recevant ledit rapport de transformation et le signal fourni par le capteur de courant secondaire et fournissant en sortie une valeur de courant effectif primaire équivalent ;
- une unité de calcul de la valeur du courant primaire équivalent optimal de soudage ; et
- un organe de régulation recevant la valeur du courant effectif primaire équivalent et la valeur du courant optimal primaire équivalent et agissant sur le dispositif de commande du courant primaire.

De préférence, le capteur de courant secondaire est une sonde magnétorésistive. Avantageusement, cette sonde est disposée au voisinage immédiat des tôles à assembler.

Avantageusement, les valeurs des différents courants sont obtenues sous forme numérique, ce qui permet d'utiliser un régulateur de type numérique.

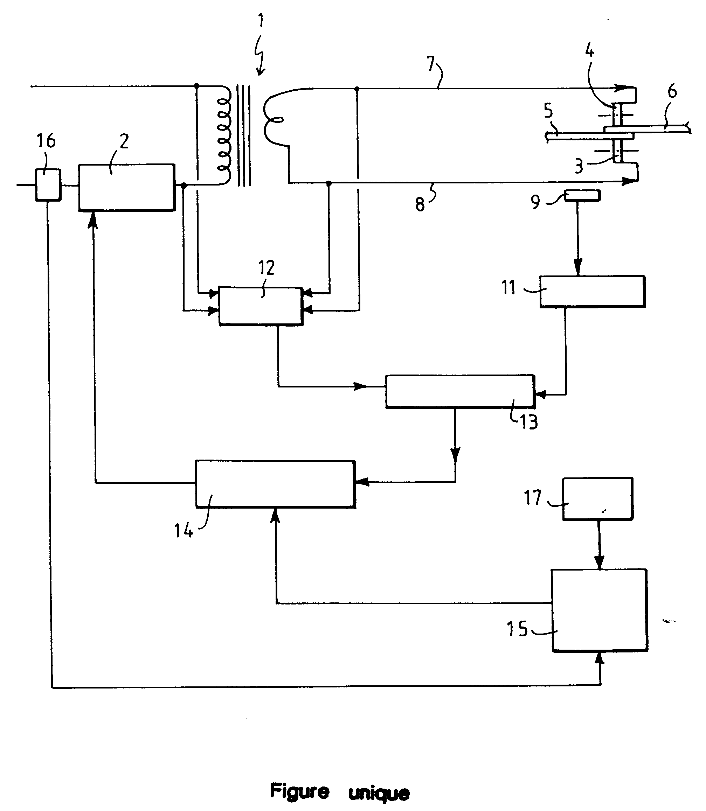

D'autres caractéristiques et avantages de l'invention ressortiront de la description qui suit d'un exemple de réalisation de l'invention, faite en se référant au dessin annexé dont la figure unique est un schéma synoptique d'un dispositif de régulation d'une soudeuse conforme à la présente invention.

On a représenté sur la figure unique une soudeuse électrique par résistance à la molette qui comporte un transformateur 1 dont le circuit primaire comprend un dispositif 2 de commande de la valeur du courant primaire. Ce dispositif est par exemple du type "hacheur de courant" avec commande par modulation de largeur d'impulsion.

Les électrodes de soudage, à savoir un ensemble de deux molettes 3 et 4 qui roulent en exerçant une pression sur la zone de recouvrement de deux tôles à assembler 5 et 6, forment les parties terminales du secondaire du transformateur 1 qui se trouve ainsi pratiquement en court-circuit. Le courant de soudage fourni par le secondaire du transformateur 1 traverse successivement une molette, la zone de recouvrement des deux tôles et la deuxième molette.

Le courant de soudage qui a une intensité très importante, par exemple 25 kA, est amené aux électrodes par des barres conductrices schématisées en 7 et 8. Un capteur de courant magnétorésistif 9 est disposé au voisinage d'une des barres d'amenée de courant 8. Ce capteur 9 est disposé le plus près possible de la zone de soudage constituée par les deux molettes 3 et 4 et les deux tôles métalliques 5 et 6 en recouvrement.

Le signal fourni par la magnétorésistance 9 est envoyé dans un convertisseur 11 qui fournit en sortie un signal en tension proportionnel à la valeur efficace du courant effectif secondaire de soudage passant dans la barre 8.

Un circuit électronique 12 mesure les tensions aux bornes des enroulements primaire et secondaire du transformateur 1. Ce circuit électronique 12 comporte un diviseur et fournit un signal représentatif du rapport de transformation instantané du transformateur 1.

Le signal de sortie du diviseur 12 est envoyé à un multiplicateur 13 qui reçoit par ailleurs le signal de sortie du circuit convertisseur 11 et qui fournit en sortie un signal représentatif du courant primaire équivalent au courant secondaire effectif de soudage mesuré par le capteur 9.

Le signal de sortie du circuit de multiplication 13 est envoyé à un organe de régulation 14 qui reçoit par ailleurs un signal provenant d'une unité de calcul 15 qui fournit un signal correspondant à un courant primaire optimal équivalent à un courant secondaire optimal de soudage. Ce courant primaire optimal de soudage peut être élaboré, comme indiqué dans la demande de brevet français précitée de la demanderesse, à partir du courant primaire du transformateur 1, en tenant compte de l'épaisseur.de chacune des deux tôles métalliques 5 et 6 ainsi que de leur résistivité électrique. Ce calcul peut également prendre en compte les caractéristiques intrinsèques de la soudeuse.

A cet effet, on prévoit dans le circuit primaire du transformateur 1 un capteur de courant 16 mesurant la valeur efficace du courant primaire et dont le signal de sortie est envoyé à l'unité de calcul de courant optimal 15. Par ailleurs, on peut prévoir un dispositif d'entrée de données 17 (tel qu'un clavier) qui permet d'entrer dans le circuit 15 des données relatives aux épaisseurs et aux résistivités électriques des deux tôles à assembler. Le capteur 16 étant disposé au primaire du transformateur où le courant n'est pas très élevé, il peut, par exemple, être constitué par un ampèremètre classique à pince ampèremétrique.

Le circuit qui vient d'être décrit fonctionne de la manière suivante.

L'ensemble du capteur magnétorésistif 9 et du convertisseur 11 fournit un signal représentatif du courant efficace secondaire de soudage. Le circuit diviseur 12 fournit la valeur instantanée du rapport de transformation du transformateur 1. Le signal de sortie du circuit de division 12 fournit une valeur du rapport de transformation qui est insensible aux fluctuations dues en particulier au fait que le circuit secondaire est pratiquement en court-circuit.

Le circuit de multiplication 13 élabore à partir des signaux fournis par les circuits 11 et 12 une valeur de courant effectif de soudage ramenée à une valeur de courant primaire.

Par ailleurs, l'unité de calcul 15 élabore à partir des données fournies par le clavier 17 et de la valeur mesurée du courant primaire fournie par le capteur 16 un courant primaire optimal de soudage.

Les signaux de sortie des circuits 13 et 15 sont comparés dans l'organe de régulation 14 de manière à fournir un signal d'écart qui, lorsqu'il dépasse une valeur seuil déterminée, sert à commander la régulation du courant primaire de manière à être ramené au dessous de cette valeur "seuil". Cette valeur "seuil" est un pourcentage de l'intensité du courant déterminé en fonction de deux paramètres : la qualité des tôles à souder, exprimée par exemple par leur résistivité électrique, et la vitesse de soudage dans le cas d'une soudeuse "à molettes", ou le temps d'application du courant dans le cas d'une soudeuse par points. Le régulateur 14 peut par exemple être constitué par un régulateur numérique dont le signal de sortie agit sur le circuit de commande du courant primaire 2.

De cette manière, on peut réaliser une régulation du courant primaire qui permet d'obtenir, à tout instant, au niveau du courant secondaire effectif de soudage une valeur correspondant à la valeur optimale du courant de soudage secondaire.

Pour réaliser une commande par régulateur numérique, il est avantageux que les signaux fournis par les circuits 11 et 12 soient déjà sous forme numérique. Ceci permet également de réaliser un suivi informatique des taux de corrections nécessaires pour la régulation ; les valeurs obtenues permettront de faire ressortir les anomalies ou dérives de l'installation de soudage.

L'installation qui vient d'être décrite peut s'appliquer à tout type d'installation de soudage électrique par résistance. En effet, il suffit à chaque fois de fournir au calculateur 15, par l'intermédiaire du clavier 17 les données correspondant à la soudeuse et aux pièces métalliques que l'on désire assembler.

L'invention n'est évidemment pas limitée au mode de réalisation qui vient d'être décrit et on peut y apporter des modifications ou variantes sans pour autant sortir de la définition de la présente invention donnée dans les revendications ci-après.

## Revendications

1. Procédé de régulation du courant de soudage d'une soudeuse par résistance électrique, du type comportant un transformateur (1) dont le circuit secondaire est pourvu d'électrodes de soudage (3,4) et dont le circuit primaire comprend un dispositif de commande du courant primaire (2), un capteur de courant secondaire (9) permettant d'en mesurer l'intensité, et une unité de calcul (15) d'un courant optimal de soudage, caractérisé en ce que :
- on exprime le courant optimal de soudage sous la forme d'un courant primaire équivalent optimal de soudage ;
- on transforme le courant mesuré par ledit capteur de courant secondaire (9) en un courant primaire équivalent effectif de soudage ;
- on compare ledit courant primaire effectif de soudage audit courant primaire optimal de soudage, et on élabore un signal d'écart ; et
- quand ledit signal d'écart dépasse une valeur "seuil" prédéterminée, on fait agir ledit signal sur le dispositif de commande (2) du courant primaire de manière à ramener ledit signal d'écart en dessous de la valeur "seuil".

2. Procédé selon la revendication 1, caractérisé en ce que le capteur de courant secondaire (9) est placé au voisinage immédiat des électrodes de soudage (3,4).

3. Procédé selon la revendication 1 ou 2, caractérisé en ce que l'on mesure en permanence les tensions primaire et secondaire du transformateur (1), en ce que l'on détermine le rapport de transformation instantané et en ce que le courant primaire effectif de soudage est obtenu par multiplication du courant mesuré par ledit capteur (9) par ledit rapport de transformation instantané.

4. Procédé selon la revendication 1 ou 2, caractérisé en ce que l'on détermine la valeur efficace du courant fourni par ledit capteur (9).

5. Soudeuse par résistance électrique pour la mise en oeuvre du procédé selon l'une des revendications 1 à 4, caractérisée en ce qu'elle comporte un transformateur de soudage (1) comprenant dans son circuit primaire un dispositif de commande du courant primaire (2) et, dans son circuit secondaire, un capteur (9) de mesure de l'intensité du courant secondaire, un circuit diviseur (12) recevant la tension primaire, d'une part, et la tension secondaire, d'autre part, et fournissant en sortie un rapport de transformation instantané, un circuit multiplicateur (13) recevant ledit rapport de transformation et le signal fourni par le capteur (9) et fournissant en sortie une valeur de courant effectif primaire équivalent, une unité de calcul (15) d'un courant primaire équivalent optimal de soudage et un organe de régulation (14) recevant le courant effectif primaire équivalent et le courant optimal primaire équivalent et agissant sur le dispositif de commande du courant primaire (2).

6. Soudeuse selon la revendication 5, caractérisée en ce que le capteur de courant secondaire (9) est une sonde magnétorésistive.
